# FASCICULE DE BREVET EUROPEEN

(11) **EP 0 573 353 B1**
(45) Date de publication et mention de la délivrance du brevet: **15.04.1998**
(21) Numéro de dépôt: 93401405.1
(22) Date de dépôt: 02.06.1993
(51) Int. Cl.: B32B 3/12, B29D 31/00, B32B 31/00, E04C 2/36, B32B 18/00, B31D 1/00

(54) **Structure en nid d'abeilles en matériau composite thermostructural et son procédé de fabrication**
Hochtemperaturbeständiger Verbundwerkstoff mit Honigwabenstruktur und Verfahren zu seiner Herstellung
High temperature composite material having honeycomb structure and process for its preparation

(30) Priorité: 04.06.1992 FR 9206790
(43) Date de publication de la demande: 08.12.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Delage, André, F-33290 Le Pian Medoc (FR); Georges, Jean-Michel, F-33170 Gradignan (FR); Maumus, Jean-Pierre, F-33150 Cenon (FR)
(74) Mandataire: Joly, Jean-Jacques

(56) Documents cités:
- WO-A-91/16277
- DE-A- 3 729 633
- US-A- 3 188 924
- DATABASE WPI Section Ch, Week 8925, Derwent Publications Ltd., London, GB; Class L02, AN 89-181962 & JP-A-1 119 574 (SHOWA HIKOKI KOGYO) 11 Mai 1989

## Description

La présente invention concerne la fabrication de structures en nid d'abeilles en matériau composite thermostructural.

Les matériaux composites thermostructuraux sont caractérisés par leurs propriétés mécaniques qui les rendent aptes à constituer des éléments de structures et par leur capacité à conserver leurs propriétés mécaniques jusqu'à des températures élevées. Des matériaux composites thermostructuraux typiques sont les matériaux composites carbone-carbone (C-C) et les matériaux composites à matrice céramique (CMC).

Les composites C-C sont constitués par une texture de renfort, ou préforme, en fibres de carbone densifiée par une matrice en carbone. Les CMC sont constitués par une préforme en fibres réfractaires (fibres en carbone ou en céramique) densifiée par une matrice céramique. Un matériau céramique couramment utilisé pour la fabrication de CMC est le carbure de silicium (SiC).

La préforme d'un composite C-C ou d'un CMC est réalisée par empilement ou drapage de strates unidirectionnelles (nappes de fils ou de câbles parallèles entre eux) ou multidirectionnelles (couches de tissu, voiles de fibres, couches de feutre), ou par bobinage de fils, rubans ou bandes, ou encore par tissage tridimensionnel. Dans le cas de drapage de strates, celles-ci peuvent être liées entre elles par aiguilletage, par couture, ou par implantation de fils transversaux. Les préformes sont élaborées à partir de fibres en carbone ou en céramique ou, plus généralement, à partir de fibres en un précurseur de carbone ou de céramique, la transformation du précurseur étant réalisée après les opérations textiles nécessaires à la fabrication de la préforme.

La densification de la préforme vise à combler la porosité accessible de celle-ci par le matériau constitutif de la matrice. Cette densification peut être réalisée par imprégnation de la préforme au moyen d'une phase liquide contenant un précurseur du matériau de la matrice, suivie d'une transformation du précurseur, ou par infiltration chimique en phase vapeur.

Les techniques évoquées ci-dessus d'élaboration de préformes fibreuses en carbone ou céramique et de densification par une matrice carbone ou céramique sont bien connues.

Il existe plusieurs procédés de fabrication de structures en nid d'abeilles.

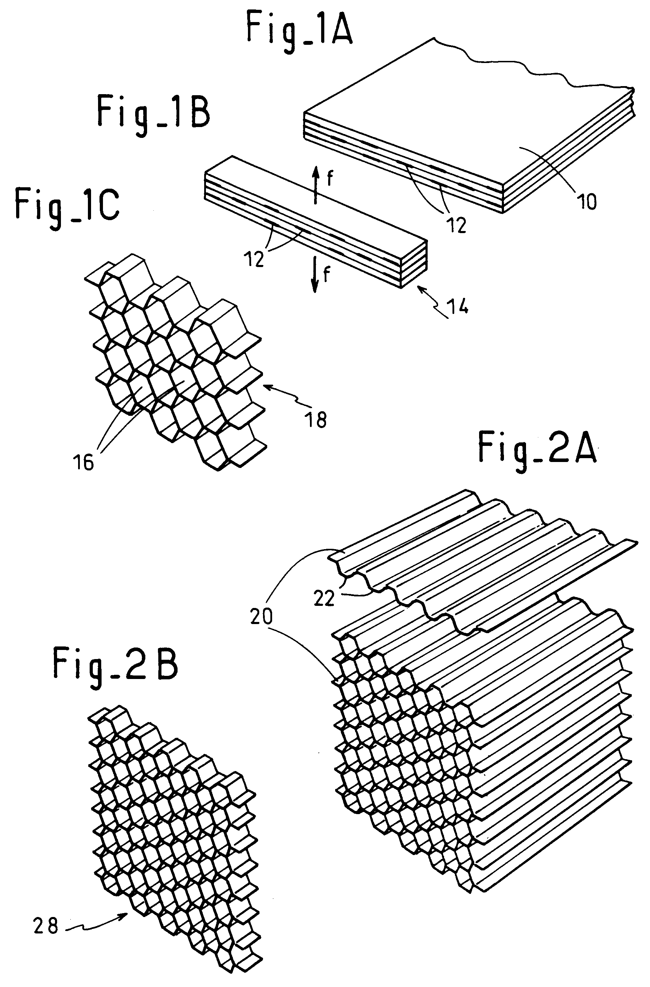

Un premier procédé connu (figures 1A, 1B et 1C et JP-A-1 119 574) consiste à empiler et coller en quinconce des feuilles 10. Le collage est réalisé le long de bandes 12 parallèles, les bandes de colle situées sur une face d'une feuille étant décalées par rapport à celles situées sur l'autre face (figure 1A). L'ensemble des feuilles est découpé en tronçons 14, perpendiculairement aux bandes de colle. Chaque tronçon est ensuite étiré en direction normale aux faces des feuilles (flèches f de la figure 1B) pour donner, par déformation, des alvéoles hexagonaux 16 (figure 1C). Un panneau en nid d'abeilles 18 est ainsi obtenu, de part et d'autre duquel peut être collée une feuille métallique ou composite.

Un tel procédé est utilisé pour réaliser des structures en nid d'abeilles métalliques. Les feuilles 10 sont découpées dans un feuillard métallique et les alvéoles 16 sont produits par déformation plastique du métal.

Ce procédé peut aussi être mis en oeuvre à partir de feuilles de carton ou de papier. Dans ce dernier cas, après empilement et collage en quinconce, les feuilles de papier peuvent être imprégnées d'une résine, par exemple une résine phénolique. La réticulation de la résine est réalisée après formation des alvéoles (ceci avant ou après découpe de l'ensemble de feuilles en tronçons).

Pour fabriquer une structure en nid d'abeilles en matériau composite thermostructural, il pourrait être envisagé de mettre en oeuvre un procédé du même type avec des strates fibreuses bidimensionnelles, par exemple des strates de tissu empilées et collées en quinconce ; la densification et, par là même, la rigidifica-tion de la structure étant réalisées après étirage et formation des alvéoles. Chaque strate devrait normalement être formée de plusieurs couches de tissu, ce qui implique la nécessité d'une liaison entre les couches pour éviter leur séparation mutuelle lors de l'étirage. En outre, une opération de collage en quinconce est malaisée à réaliser sur des tissus avec la régularité et la précision voulues pour qu'au moment de l'étirage un arrachage du tissu dû à un défaut local ne se produise pas. De plus, lors de l'opération de densification après étirage, il est à craindre que des contraintes d'origine thermique entraînent une destruction du collage.

Une solution consistant à coudre en quinconce les strates de tissu, plutôt qu'à les coller, permettrait d'éviter certains inconvénients, mais poserait des difficultés importantes de mise en oeuvre.

Un deuxième procédé connu (figures 2A, 2B) consiste à utiliser des feuilles cannelées, par exemple en clinquant métallique. Les feuilles cannelées 20 sont superposées et collées ou soudées le long de leurs facettes 22 en contact mutuel (figure 2A). Des panneaux en nid d'abeilles 28 sont directement obtenus par découpe du bloc de feuilles 20 perpendiculairement aux cannelures (figure 2B).

Ce procédé peut permettre de réaliser des structures en nid d'abeilles en matériau composite en utilisant des feuilles cannelées elles-mêmes en matériau composite. De telles feuilles peuvent être obtenues par drapage de couches de tissu en leur donnant la forme cannelée voulue et densification, par exemple par drapage et moulage de couches de tissu préimprégnées par une résine. Toutefois, il est nécessaire ensuite d'assurer un collage efficace des feuilles cannelées susceptible de résister aux températures de service auxquelles des matériaux thermostructuraux peuvent être amenés à subir. En outre, les opérations de préfabrication des feuilles cannelées sont longues et coûteuses, ce qui alourdit considérablement le prix de revient de la structure en nid d'abeilles.

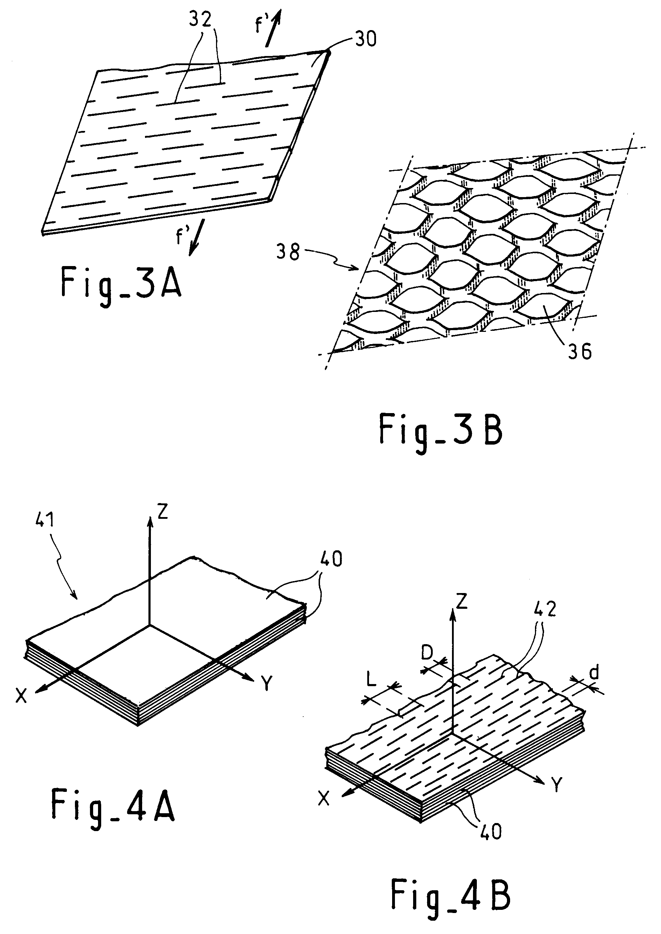

Enfin, un troisième procédé connu (figures 3A et 3B) utilise une feuille 30, par exemple une feuille métallique dans laquelle sont formées des découpes 32. Les découpes sont réalisées en quinconce le long de lignes parallèles (figure 3A). Les découpes sont de mêmes longueurs et espacées régulièrement les unes des autres le long de chaque ligne. Les découpes situées le long d'une ligne sont décalées par rapport à celles des lignes adjacentes et chaque découpe s'étend sur une longueur supérieure à la distance séparant deux découpes voisines alignées. La feuille 30 est déployée par traction perpendiculairement aux lignes de découpes (flèches f' de la figure 3A). Par déformation plastique du métal, il se forme des alvéoles 36 aux emplacements des découpes (figure 3B). Le déploiement est limité pour ne pas induire, notamment aux extrémités des découpes 32, des contraintes susceptibles de provoquer des déchirures de la feuille. L'axe de chaque alvéole est incliné par rapport au plan initial de la feuille d'un angle inférieur à 90°, de sorte que les parois des alvéoles ne sont pas perpendiculaires au plan général du panneau en nid d'abeilles 38 obtenu.

Ce procédé est pratiquement impossible à mettre en oeuvre sur des couches de tissu sans provoquer de déchirures du tissu aux extrémités des découpes au moment du déploiement. En outre, ce procédé présente une limitation importante quant à l'épaisseur du panneau en nid d'abeilles pouvant être obtenu. En effet, cette épaisseur est déterminée par la distance entre lignes de découpes et cette distance doit rester suffisamment faible pour permettre la formation d'alvéoles lors du déploiement.

Aussi, la présente invention a pour but de fournir un procédé permettant de réaliser une structure en nid d'abeilles en matériau composite thermostructural sans rencontrer les inconvénients précédents.

En particulier, l'invention a pour but de fournir un procédé grâce auquel des structures en nid d'abeilles en matériau composite thermostructural peuvent être fabriquées à un prix de revient suffisamment modéré pour ouvrir de larges domaines d'applications.

Ce but est atteint par un procédé de fabrication d'une structure en nid d'abeilles en un matériau composite comprenant une texture de renfort fibreuse densifiée par une matrice, les fibres de la texture de renfort étant en un matériau choisi parmi le carbone et les céramiques, de même que la matrice, procédé comportant les étapes qui consistent à:
- réaliser une texture fibreuse tridimensionnelle au moyen de strates bidimensionnelles superposées et liées entre elles au moyen de fibres traversant les strates,
- réaliser des découpes en quinconce en forme de fentes, à travers les strates, dans toute l'épaisseur de la texture,
- étirer la texture découpée en direction transversale par rapport aux découpes et parallèlement aux strates pour former des alvéoles dont les parois sont constituées par les lèvres des découpes, et
- densifier la texture découpée et maintenue à l'état étiré, par le matériau constitutif de la matrice, pour obtenir une structure en nid d'abeilles rigide en matériau thermostructural.

Les strates formant la texture de renfort peuvent être au moins en partie constituées par des couches de tissu. La liaison entre les strates est réalisée par exemple par implantation de fils, par couture ou par aiguilletage. Dans ce dernier cas, lorsque les strates comprennent des couches de tissu, il peut être avantageux d'intercaler entre celles-ci des strates formées de voiles de fibres, ceci afin de procurer des fibres susceptibles d'être prélevées par les aiguilles et disposées à travers les strates lors de l'aiguilletage.

Des textures de renfort fibreuses formées de strates bidimensionnelles superposées et liées entre elles par exemple par aiguilletage sont bien connues.

Le procédé conforme à l'invention est en particulier remarquable du fait qu'une préforme d'une structure en nid d'abeilles est simplement obtenue par formation de découpes en quinconce et étirage de la texture.

Ce procédé se distingue de celui illustré par les figures 1A à 1C du fait que, selon l'invention, l'étirage est réalisé parallèlement aux plans des strates et non pas perpendiculairement à celles-ci.

Le procédé selon l'invention se distingue aussi de celui illustré par les figures 3A et 3B. En effet, avec ce procédé connu, les parois des alvéoles sont constituées par les parties de la feuille situées entre deux lignes de découpes. Le déploiement a pour effet de provoquer une inclinaison progressive de ces parois par rapport au plan initial de la feuille en même temps que l'expansion de la feuille. Il n'en est pas ainsi avec le procédé conforme à l'invention. L'étirage de la texture a pour effet d'écarter mutuellement les lèvres de chaque découpe pour former des alvéoles dont les parois sont formées par les lèvres des découpes. L'épaisseur de la structure en nid d'abeilles est déterminée par l'épaisseur de la texture fibreuse et ne connaît donc pas la même limitation que dans le cas du procédé des figures 3A et 3B où l'épaisseur de la structure en nid d'abeilles est déterminée par la distance (nécessairement limitée) entre deux lignes de découpes voisines.

L'invention vise aussi une structure en nid d'abeilles en matériau composite thermostructural telle qu'elle peut être obtenue par le procédé défini plus haut.

Conformément à l'invention, une telle structure, comprenant une texture de renfort fibreuse densifiée par une matrice, est caractérisée en ce que la texture de renfort est une texture tridimensionnelle formée de strates bidimensionnelles liées entre elles par des fibres traversant les strates, les alvéoles de la structure en nid d'abeilles étant formés à travers les strates.

D'autres particularités et avantages du procédé et de la structure conformes à l'invention ressortiront à la lecture de la description faite, ci-après, à titre indicatif et non limitatif.

Il sera fait référence aux dessins annexés sur lesquels :
- les figures 1A, 1B et 1C, déjà décrites, illustrent un procédé connu pour réaliser des structures en nid d'abeilles ;
- les figures 2A et 2B, déjà décrites, illustrent un autre procédé connu pour réaliser des structures en nid d'abeilles ;
- les figures 3A et 3B, déjà décrites, illustrent encore un autre procédé connu pour réaliser des structures en nid d'abeilles ;
- les figures 4A à 4F illustrent différentes étapes successives d'un mode de mise en oeuvre du procédé selon l'invention pour fabriquer une texture plane en nid d'abeilles en matériau composite thermostructural ;
- les figures 5A à 5C illustrent la formation de peaux sur une structure en nid d'abeilles pour réaliser un panneau autoraidi ; et
- les figures 6A et 6B illustrent un autre mode de mise en oeuvre du procédé selon l'invention pour fabriquer une texture de révolution en nid d'abeilles.

Un procédé conforme à l'invention pour la réalisation d'une structure en nid d'abeilles plane en matériau composite thermostructural de type carbone/carbone est maintenant décrit en référence aux figures 4A à 4F.

Une première étape du procédé consiste à réaliser une texture de renfort tridimensionnelle en fibres de carbone.

A cet effet, des strates bidimensionnelles 40 en carbone ou en un précurseur du carbone (par exemple en polyacrylonitrile, ou PAN, à l'état préoxydé) sont superposées et aiguilletées (figure 4A). Les strates 40 sont des couches par exemple de tissu ou de complexe formé de tissu et voile de fibres, le voile de fibres apportant des fibres pouvant être aisément prélevées par les aiguilles, lors de l'aiguilletage, pour être implantées à travers les strates. L'aiguilletage est réalisé de préférence sur les fibres à l'état de précurseur de carbone, un aiguilletage effectué directement sur les fibres de carbone ayant un effet plus destructeur. Pour la réalisation de l'aiguilletage, il peut être procédé au fur et à mesure de l'empilement des strates 40, comme décrit dans le document FR-A-2 584 106, l'épaisseur de la texture étant déterminée en fonction de celle de la structure en nid d'abeilles à réaliser.

D'autres techniques de liaison des strates entre elles peuvent être utilisées, par exemple la couture, ou bien encore l'implantation de fils comme décrit dans le document FR-A-2 565 262.

Lorsque la texture tridimensionnelle 41 ainsi obtenue est en fibres en précurseur de carbone, un traitement thermique de carbonisation doit être réalisé pour transformer le précurseur en carbone. Ce traitement entraînant un léger retrait dimensionnel, il est de préférence effectué avant la réalisation, dans la texture, de découpes ou fentes permettant la formation des alvéoles de la structure en nid d'abeilles.

Comme le montre la figure 4B, ces découpes 42 en forme de fentes sont réalisées en quinconce, leurs dimensions et localisations définissant les dimensions et formes des alvéoles. Les découpes 42 sont réalisées dans des plans parallèles entre eux et perpendiculaires aux plans des strates 40. De préférence, les plans de découpes sont parallèles à l'une des directions X et Y suivant lesquelles sont orientés les fils de chaîne et les fils de trame du tissu des strates 40, par exemple la direction X des fils de chaîne (les couches de tissu étant superposées avec leurs fils de chaîne parallèles, de même, par conséquent, que leurs fils de trame). Ainsi, la continuité des fils de chaîne (ou de trame) est conservée dans les strates de tissu après formation des découpes. Les découpes sont toutes de même longueur L et sont régulièrement espacées d'une même distance D dans chaque plan. Les plans sont régulièrement espacés les uns des autres d'une distance d. La longueur L des découpes est supérieure à la longueur D de l'intervalle entre celles-ci et la disposition en quinconce, dans l'exemple illustré, est telle que le milieu d'une découpe 42 dans un plan de découpes est au niveau du milieu de l'intervalle entre deux découpes 42 dans les plans de découpes voisins.

Les découpes 42 sont réalisées par exemple au couteau ou au jet d'eau.

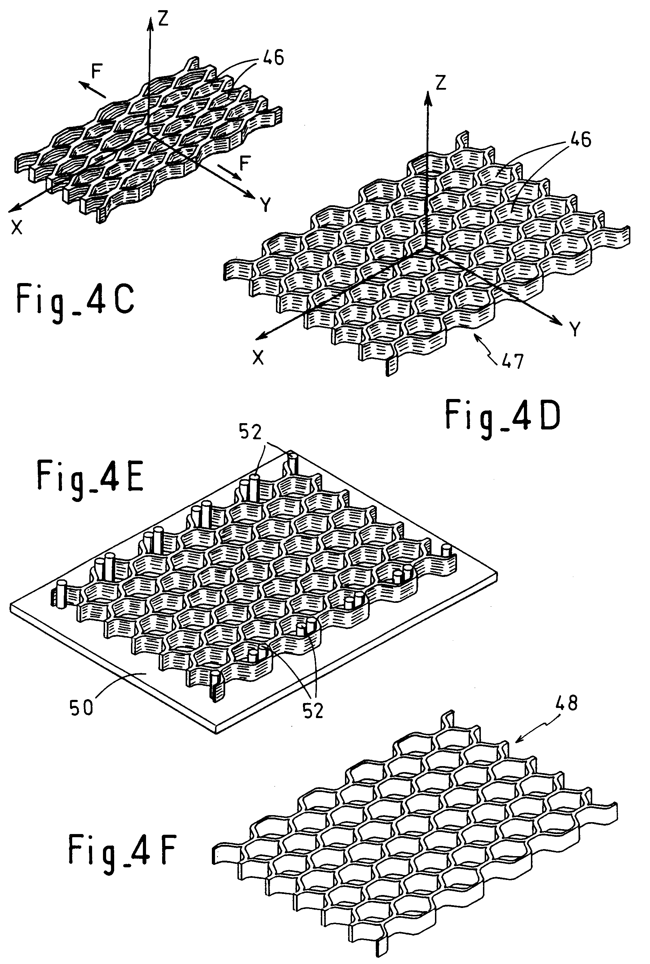

Après réalisation des découpes, la texture 41 est étirée en direction Y perpendiculaire aux plans des découpes (flèches F de la figure 4C).

L'étirage se traduit par un écartement des lèvres des découpes 42 (figure 4C) et la formation d'alvéoles 46 dont les parois sont définies par ces lèvres. L'étirage est interrompu lorsque les alvéoles 46 ont atteint la forme voulue (figure 4D) et avant que les contraintes exercées aux extrémités des découpes provoquent une déchirure de la texture.

On obtient ainsi une préforme fibreuse en nid d'abeilles 47 dans laquelle les parois des alvéoles 46 sont perpendiculaires aux plans X, Y des strates 40.

Il est possible de réaliser les découpes 42 dans des plans inclinés par rapport à la normale aux strates 40. Après étirage en direction Y, on obtient alors des alvéoles dont les parois ne sont pas perpendiculaires aux faces de la texture.

Des essais effectués sur des textures telles que celle décrite ci-avant ont montré que, lors de l'étirage, les parois des alvéoles restent perpendiculaires aux plans X, Y et que les déformations de surface, induites notamment dans les zones d'extrémités des découpes, restent de très faible amplitude. Il a été aussi constaté que l'étirage ne provoque pas de déchirure aux extrémités des découpes. A titre de comparaison, des essais effectués sur des textures identiques à l'exception de l'aiguilletage (pas de liaison entre strates), ont montré que l'étirage pouvait pro-voquer un endommagement de la texture aux extrémités des découpes.

Il doit être remarqué que la capacité de déformation de la texture 41 par traction en direction Y présente un caractère surprenant dans la mesure où les tissus sont réputés indéformables dans leur plan.

Après étirage, la préforme 47 est densifiée en étant maintenue à l'état étiré au moyen d'un outillage. Ce dernier (figure 4E) est constitué par une sole en graphite 50 et des pions en graphite 52 implantés dans des alvéoles 46 le long des bords de la préforme opposés en direction Y. Les pions 52 pénètrent dans des trous formés dans la sole 50.

L'ensemble constitué par l'outillage 50, 52 et la préforme 47 est introduit dans un four dans lequel la préforme 47 est densifiée par du carbone par infiltration chimique en phase vapeur. De façon bien connue en soi, une phase gazeuse contenant un ou plusieurs hydrocarbures est introduite dans l'enceinte dans des conditions de température et de pression déterminées pour favoriser une décomposition de la phase gazeuse au contact des fibres de la préforme 47 et libérer du carbone qui comble progressivement la porosité de la préforme 47.

Après densification, on obtient une structure en nid d'abeilles 48 en composite carbone/carbone (figure 4F). Une telle structure est susceptible de nombreuses applications. Par exemple, elle peut constituer une sole de four de traitement thermique et remplacer avantageusement une sole métallique obtenue par moulage ou par soudage d'éléments. Une telle structure en nid d'abeilles peut aussi être utilisée comme outillage rigide pour le maintien d'une préforme à densifier par infiltration chimique en phase vapeur, à la place des outillages en graphite traditionnels.

Des structures en nid d'abeilles en matériau composite thermostructural peuvent trouver aussi des applications pour constituer des panneaux autoraidis uti-lisables dans des applications aéronautiques ou spatiales, par exemple comme élé-ments de structures d'avions spatiaux.

La structure en nid d'abeilles peut, pour certaines applications, être munie d'une peau sur chaque face.

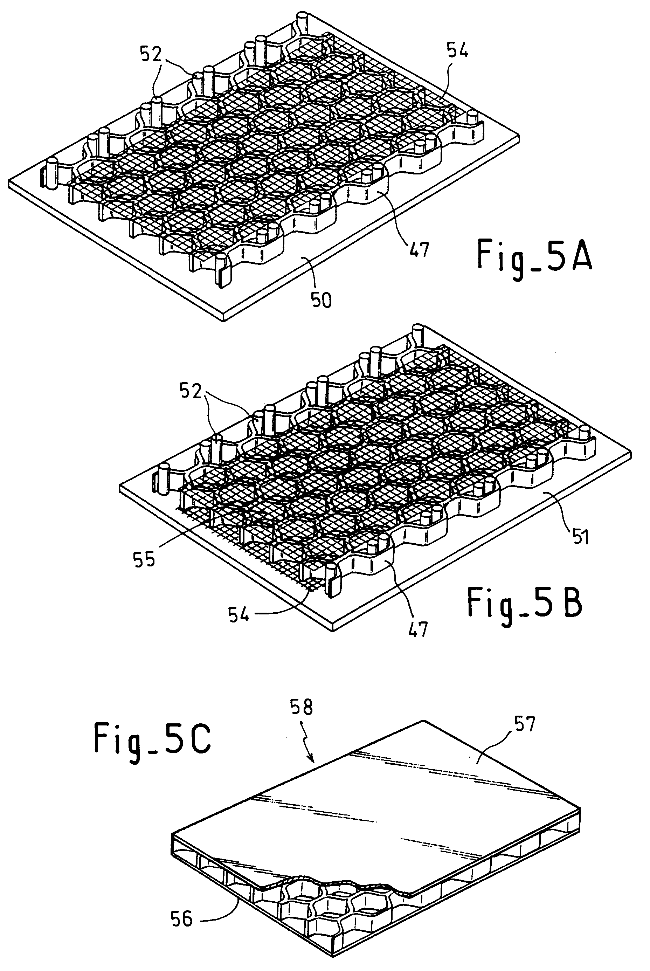

A cet effet, comme le montre la figure 5A, au moins une couche fibreuse 54, par exemple une couche de tissu, est tendue sur la préforme 47 maintenue sur la sole 50 au moyen des pions 52. La couche de tissu 54 est aiguilletée sur les tranches des alvéoles 46 au moyen d'une tête d'aiguilletage dont les déplacements peuvent être programmés, par exemple comme décrit dans le document FR-A-2 669 941.

Après aiguilletage de la strate 54, on place sur la préforme 47 et la couche de tissu 54 une sole en graphite 51 analogue à la sole 50 et munie de trous disposés de manière à recevoir les extrémités supérieures des pions 52 qui dépassent de la préforme 47. L'ensemble est retourné et la sole 50 est retirée pour permettre la mise en place d'au moins une autre couche de tissu 55 tendue sur l'autre face de la préforme 47 et l'aiguilletage de cette autre strate (figure 5B).

L'ensemble est ensuite introduit dans un four d'infiltration chimique en phase vapeur pour densifier simultanément la préforme 47 et les couches de tissu 54, 55 aiguilletées sur ses deux faces, permettant ainsi l'obtention d'un panneau autoraidi 58 comprenant un âme rigide 48 en nid d'abeilles recouverte de deux peaux rigides 56, 57 obturant les alvéoles 46 (figure 5C).

Lorsque le panneau autoraidi à réaliser n'est pas soumis à des efforts importants en cisaillement, les couches de tissu 54, 55 pourront être simplement collées sur les faces de la préforme 47 avant d'être densifiées avec celle-ci, la codensification complétant la liaison nécessaire entre les peaux et l'âme du panneau.

Dans la description qui précède, il a été envisagé la réalisation de structures en nid d'abeilles en matériau composite carbone/carbone.

Bien entendu, l'invention est applicable à la réalisation de structures en nid d'abeilles en matériaux composites thermostructuraux autres que les composites carbone/carbone, en particulier les composites à matrice céramique dont la texture de renfort est en carbone ou en céramique. Les techniques mises en oeuvre sont celles, connues, de la réalisation de textures tridimensionnelles en fibres de carbone ou de céramique, et de la densification par une matrice céramique.

On notera aussi que la densification de la préforme en nid d'abeilles, éventuellement munie de strates sur ses faces, peut être réalisée par voie liquide, c'est-à-dire par imprégnation au moyen d'un précurseur de la matrice en phase liquide, puis par transformation du précurseur. Plusieurs cycles d'imprégnation, éventuellement complétés par un cycle d'infiltration chimique en phase vapeur, peuvent être nécessaires.

Enfin, bien que l'on ait décrit ci-avant la réalisation de structures en nid d'abeilles planes, l'invention est applicable à la réalisation de structures courbes ou cylindriques. Celles-ci peuvent être obtenues par mise en forme de la préforme en nid d'abeilles sur un outillage approprié, avant densification et rigidification.

Il est aussi envisageable de réaliser une texture de renfort tridimensionnelle de révolution 60 par aiguilletage de strates 61 enroulées sur un mandrin (figure 6A), comme décrit par exemple dans le document FR-A-2 584 107. Des découpes en quinconce 62 sont formées dans des plans méridiens, à travers toute l'épaisseur de la texture 60.

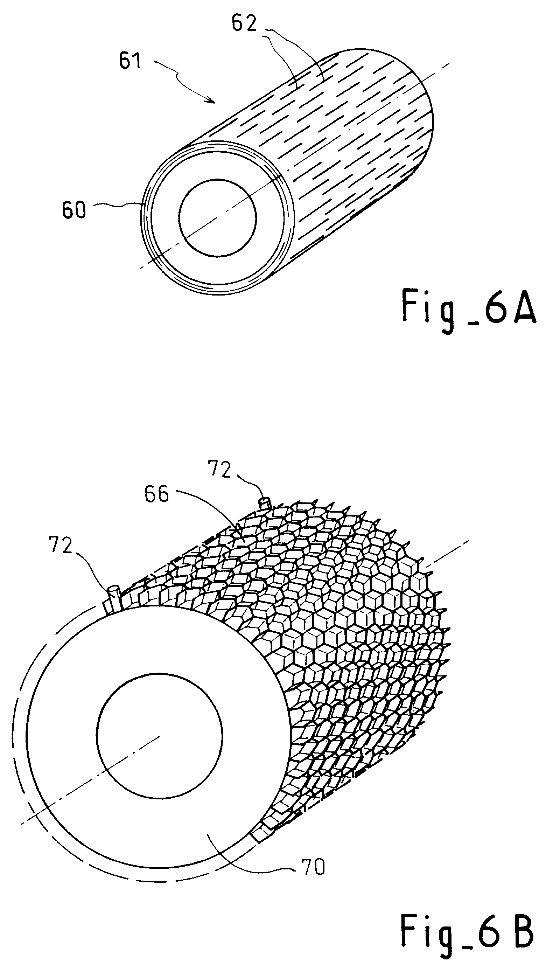

La texture découpée est étirée sur un mandrin 70 pour former des alvéoles 66. Des pions 72, implantés dans le mandrin 70, maintiennent la texture à l'état étiré en vue de sa densification, par exemple par infiltration en phase vapeur (figure 6B). Après densification, une structure cylindrique rigide en nid d'abeilles est obtenue.

## Revendications

1. Procédé de fabrication d'une structure en nid d'abeilles en un matériau composite thermostructural comprenant une texture de renfort fibreuse densifiée par une matrice, les fibres de la texture de renfort étant en un matériau choisi parmi le carbone et les céramiques, de même que la matrice, procédé caractérisé en ce qu'il comporte les étapes qui consistent à :
- réaliser une texture fibreuse tridimensionnelle (41) au moyen de strates bidimensionnelles (40) superposées et liées entre elles au moyen de fibres traversant les strates,
- réaliser des découpes en quinconce en forme de fentes (42), à travers les strates, dans toute l'épaisseur de la texture,
- étirer la texture découpée en direction transversale par rapport aux découpes (42) et parallèlement aux strates (40) pour former des alvéoles (46) dont les parois sont constituées par les lèvres des découpes (42), et
- densifier la texture découpée et maintenue à l'état étiré, par le matériau constitutif de la matrice, pour obtenir une structure en nid d'abeilles rigide (48) en matériau thermostructural.

2. Procédé selon la revendication 1, caractérisé en ce que les strates bidimensionnelles (40) de la texture tridimensionnelle (41) comportent des couches de tissu.

3. Procédé selon la revendication 2, caractérisé en ce que les découpes (42) sont réalisées parallèlement à l'une des directions des fils de chaîne et des fils de trame des couches de tissu.

4. Procédé selon l'une quelconque des revendications 1 à 3, caractérisé en ce que la liaison entre les strates (40) de la texture tridimensionnelle est réalisée par aiguilletage.

5. Procédé selon l'une quelconque des revendications 1 à 4, caractérisé en ce que la texture découpée et étirée (47) est densifiée par infiltration chimique en phase vapeur en étant maintenue à l'état étiré au moyen d'un outillage (50, 52).

6. Procédé selon l'une quelconque des revendications 1 à 5, caractérisé en ce que la texture découpée et étirée (47) est munie d'au moins une couche fibreuse (54, 55) sur chaque face parallèle aux strates de la texture, et l'ensemble formé par la texture étirée et les couches fibreuses est densifié pour obtenir un panneau autoraidi (58) comprenant une âme en nid d'abeilles rigide recouverte d'une peau rigide sur chaque face.

7. Procédé selon la revendication 6, caractérisé en ce que la couche fibreuse placée sur chaque face de la texture est liée à celle-ci par aiguilletage.

8. Structure en nid d'abeilles en un matériau composite thermostructural comprenant une texture de renfort fibreuse densifiée par une matrice, les fibres de la texture de renfort étant en un matériau choisi parmi le carbone et les céramiques, de même que la matrice, caractérisée en ce que la texture de renfort est une texture tridimensionnelle formée de strates bidimensionnelles (40) liées entre elles par des fibres traversant les strates, les alvéoles (46) de la structure en nid d'abeilles (48) étant formés à travers les strates.

9. Structure en nid d'abeilles selon la revendication 8, caractérisée en ce que les strates bidimensionnelles (40) comprennent des couches de tissu dans lesquelles la continuité des fils de chaîne ou de trame est conservée.

10. Structure en nid d'abeilles selon l'une quelconque des revendications 8 et 9, caractérisée en ce qu'elle comprend deux peaux rigides (56, 57) couvrant ses faces parallèles aux strates de la texture de renfort et obturant les alvéoles (46).

## Claims

1. A method of manufacturing a honeycomb structure of thermostructural composite material comprising a fiber reinforcing fabric densified by a matrix, the fibers of the reinforcing fabric being of a material selected from carbon and ceramics, as is the matrix, the method being characterised in that it comprises the following steps:
making a three-dimensional fiber fabric (41) by means of superposed two-dimensional plies (40) that are bonded together by means of fibers passing through the plies;
making slit-shaped cuts in a staggered configuration (42) through the plies, and through the entire thickness of the fabric;
stretching the cut fabric in a direction that is transverse with respect to the cuts (42) and that is parallel to the plies (40) so as to form cells (46) whose walls are constituted by the lips of the cuts (42); and
while the cut fabric is held in the stretched state, densifying it using the matrix-constituting material to obtain a rigid honeycomb structure (48) of thermostructural material.

2. A method according to claim 1, characterised in that the two-dimensional pies (40) of the three-dimensional fabric (41) comprise layers of cloth.

3. A method according to claim 2, characterised in that the cuts (42) are made parallel to one of the following directions: the warp thread direction and the weft thread direction of the layers of cloth.

4. A method according to any one of claims 1 to 3, characterised in that the bonding between the plies (40) of the three-dimensional fabric is provided by needling.

5. A method according to any one of claims 1 to 4, characterised in that the cut and stretched fabric (42) is densified by chemical vapor infiltration while being held in the stretched state by means of tools (50, 52).

6. A method according to any one of claims 1 to 5, characterised in that the cut and stretched fabric (47) is provided with at least one fiber layer (54, 55) on each of its faces parallel to the plies of the fabric, and the assembly formed by the stretched fabric and the fiber layers is densified to obtain a self-rigid panel (58) comprising a rigid honeycomb core covered by a rigid skin on each face.

7. A method according to claim 6, characterised in that the fiber layer placed on each face of the fabric is bonded thereto by needling.

8. A honeycomb structure of thermostructural composite material comprising a fiber reinforcing fabric densified by a matrix, the fibers of the reinforcing fabric being of a material selected from carbon and ceramics, as is the matrix, the structure being characterised in that the reinforcing fabric is a three-dimensional fabric formed by two-dimensional plies (40) bonded together by fibers passing through the plies, the cells (46) of the honeycomb structure (48) being formed through the plies.

9. A honeycomb structure according to claim 8, characterised in that the two-dimensional plies (40) comprise layers of cloth which retain the continuity of the warp or weft threads.

10. A honeycomb structure according to any one of claims 8 and 9, characterised in that it comprises two rigid skins (56, 57) covering its faces parallel to the plies of the reinforcing fabric and closing the cells (46).

## Patentansprüche

1. Verfahren zur Herstellung eines Wabengefüges aus einem bei erhöhter Temperatur tragfähigen Verbundmaterial, das ein mit einer Matrix verdichtetes faseriges Verstärkungsgefüge aufweist, wobei die Fasern des Verstärkungsgefüges, ebenso wie die Matrix, aus einem Material bestehen, das ausgewählt ist unter Kohlenstoff und den Keramiken, dadurch gekennzeichnet, daß es die folgenden Schritte enthält:
- Herstellen eines dreidimensionalen Fasergefüges (41) mittels zweidimensionaler Schichten (40), die übereinander gelegt und mittels die Schichten durchdringender Fasern untereinander verbunden sind,
- Ausführen von versetzten Schnitten in Form von Schlitzen (42) durch die Schichten hindurch in der ganzen Dicke des Gefüges,
- Auseinanderziehen des eingeschnittenen Gefüges in Querrichtung bezüglich der Schnitte (42) und parallel zu den Schichten (40), um Waben (46) auszubilden, deren Wandungen von den Lippen der Schnitte (42) ausgebildet werden, und
- Verdichten und Halten im auseinandergezogenen Zustand des eingeschnittenen Gefüges durch das die Matrix bildende Material, um ein steifes Wabengefüge (48) aus bei erhöhter Temperatur tragfähigem Material zu erhalten.

2. Verfahren nach Anspruch 1, dadurch gekennzeichnet, daß die zweidimensionalen Schichten (40) des dreidimensionalen Gefüges (41) Gewebeeinlagen enthalten.

3. Verfahren nach Anspruch 2, dadurch gekennzeichnet, daß die Schnitte (42) parallel zur Richtung der Kettfäden oder zur Richtung der Schußfäden der Gewebeeinlagen ausgeführt werden.

4. Verfahren nach einem der Ansprüche 1 bis 3, dadurch gekennzeichnet, daß die Verbindung zwischen den Schichten (40) des dreidimensionalen Gefüges durch Nadelung ausgeführt wird.

5. Verfahren nach einem der Ansprüche 1 bis 4, dadurch gekennzeichnet, daß das eingeschnittene und auseinandergezogene Gefüge (47) durch chemische Infiltration in der Dampfphase verdichtet wird, während es mittels eines Werkzeugs (50, 52) im auseinandergezogenen Zustand gehalten wird.

6. Verfahren nach einem der Ansprüche 1 bis 5, dadurch gekennzeichnet, daß das eingeschnittene und auseinandergezogene Gefüge (47) auf jeder zu den Schichten des Gefüges parallelen Seite mit mindestens einer Faserschicht (54, 55) versehen wird, und das durch das auseinandergezogene Gefüge und die Faserschichten gebildete Ganze verdichtet wird, um eine selbsttragende Platte (58), die einen auf jeder Seite mit einer steifen Außenschicht bedeckten steifen Kern aus Waben aufweist, zu erhalten.

7. Verfahren nach Anspruch 6, dadurch gekennzeichnet, daß die auf jeder Seite des Gefüges angebrachte Faserschicht durch Nadelung an dieses gebunden wird.

8. Wabengefüge aus einem bei erhöhter Temperatur tragfähigen Verbundmaterial, das ein mit einer Matrix verdichtetes faseriges Verstärkungsgefüge aufweist, wobei die Fasern des Verstärkungsgefüges, ebenso wie die Matrix, aus einem Material bestehen, das unter Kohlenstoff und den Keramiken ausgewählt ist, dadurch gekennzeichnet, daß das Verstärkungsgefüge ein aus zweidimensionalen Schichten (40), die untereinander mittels die Schichten durchdringender Fasern verbunden sind, gebildetes dreidimensionales Gefüge ist, wobei die Waben (46) des Wabengefüges (48) durch die Schichten hindurch ausgebildet sind.

9. Wabengefüge nach Anspruch 8 dadurch gekennzeichnet, daß die zweidimensionalen Schichten (40) Gewebeeinlagen, in denen die Stetigkeit der Kettfäden oder der Schußfäden erhalten geblieben ist, aufweisen.

10. Wabengefüge nach Anspruch 8 oder 9, dadurch gekennzeichnet, daß es zwei steife Außenschichten (56, 57), die die zu den Schichten des Verstärkungsgefüges parallelen Seiten bedecken und die Waben (46) verschließen, enthält.
